# EUROPÄISCHE PATENTSCHRIFT

(11) **EP 3 278 658 B1**
(45) Veröffentlichungstag und Bekanntmachung des Hinweises auf die Patenterteilung: **30.10.2019**
(21) Anmeldenummer: 17183905.3
(22) Anmeldetag: 31.07.2017
(51) Int. Cl.: A01F 15/07

(54) **BALLENWICKLER**
BALE WRAPPER
ENRUBANNEUSE

(30) Priorität: 01.08.2016 DE 202016004710 U
(43) Veröffentlichungstag der Anmeldung: 07.02.2018
(73) Patentinhaber: PÖTTINGER Landtechnik GmbH, 4710 Grieskirchen (AT)
(72) Erfinder: LACKNER, Christian, 4060 Leonding (AT); PRECHTL, Wolfgang, 4722 Bruck-Waasen (AT)
(74) Vertreter: Thoma, Michael

(56) Entgegenhaltungen:
- EP-A1- 1 872 648
- WO-A1-00/64237
- GB-A- 2 249 077

## Beschreibung

Die vorliegende Erfindung betrifft einen Ballenwickler zum Umwickeln von Erntegutballen mit einer Wickelmaterialbahn, umfassend eine Zuführeinrichtung zum Zuführen der Wickelmaterialbahn, eine Schneideinrichtung zum Abschneiden der Wickelmaterialbahn nach Umwickeln des Erntegutballens sowie eine Raffeinrichtung zum Raffen der Wickelmaterialbahn beim Abschneiden.

In der Landwirtschaft wird Erntegut in zunehmendem Maße zu Ballen verpresst, die mit einem Netz und/oder einer Folie umwickelt werden, um Transport und Lagerung zu vereinfachen. Dabei kann halm- und/oder blattförmiges Erntegut wie Gras, Heu oder Stroh durch Ballenpressen zu Erntegutballen geformt und gepresst werden, die dann noch unmittelbar an der Ballenpresse mit einer Wickelmaterialbahn umwickelt werden, wenn sich der Ballenwickler direkt beispielsweise heckseitig an der Ballenpresse befindet. Ebenfalls ist es bekannt, die Ballen zunächst zu schnüren oder mit einem Netz zu umgeben und sodann am Boden abzuladen und nachfolgend mit Ballenwicklern wieder aufzunehmen, um sie mit einer Folie zu umwickeln, die die Ballen dann vor Feuchtigkeit schützt und zusammenhält.

Im Ballenwickler wird der Erntegutballen regelmäßig mit einer Wickelmaterialbahn eingewickelt, die von einer Wickelmaterialrolle als laufendes Gut abgezogen wird. Sind ein, zwei oder drei oder ggf. auch mehr Lagen um den Ballen gewickelt, wird die Wickelmaterialbahn von einer Schneideinrichtung des Ballenwicklers, beispielsweise einem Messer abgeschnitten.

Hierbei ist zum einen das Abschneiden selbst und sodann das Zuführen der abgeschnittenen Wickelmaterialbahn zu einem neuen Erntegutballen nicht ganz einfach, da das Wickelmaterial meist sehr dünn ist und keine Formstabilität aufweist, insbesondere wenn als Wickelmaterial dünne Folien Verwendung finden. Deshalb wurde bereits vorgeschlagen, die Wickelfolien beim Abschneiden zu fixieren, beispielsweise durch Einklemmen mit Hilfe von aufeinanderfahrbaren Klemmprofilen, vgl. beispielsweise die Schrift DE 103 34 679 A1.

Zum anderen ist es bekannt, zum Abschneiden die Wickelfolie an der Schneideinrichtung zu einem Zopf zusammenzuraffen, da sich ein zusammengeraffter Folienstrang leichter schneiden und handhaben lässt, insbesondere da der Folienstrang gegenüber der flach ausgebreiteten Folie eine größere Steifigkeit und eine geringere Breite als die Folienbahn in der Normalbreite besitzt und insbesondere auch besser gegriffen und fixiert werden kann, um dem Schneidmesser bzw. Abtrennmittel den nötigen Widerstand entgegensetzen zu können. Beispielsweise zeigt die Schrift DE 10 2009 010 547 B3 einen Ballenwickler mit einer solchen Raffvorrichtung, die die Folienbahn zum Zwecke des Abschneidens zusammenrafft. Dabei werden zunächst unter der Folie liegende Folienleitstäbe zusammengeschwenkt, so dass die Folie von den Rändern her gerafft und schließlich zwischen den zusammengefahrenen Stäben geklemmt wird. In diesem gerafften und geklemmten Zustand kann die Schneideinrichtung dann die Folie abtrennen.

Durch ein solches Raffen und Bilden eines Zopfs kann die Folie zwar deutlich sicherer abgeschnitten werden, und auch die Zuführung dieser kompakten und griffigen Struktur zum nächsten, neu zu wickelnden Ballen vereinfacht sich. Ein gravierender Nachteil ist hierbei jedoch der zusätzliche Materialverbrauch, da zu der eigentlich benötigten Folienlänge, die zum ein- oder zweilagigen Umwickeln des Ballens benötigt wird, auch noch die gerafften Endabschnitt hinzuzurechnen sind. Soll ein Ballen beispielsweise mit zwei Lagen umwickelt werden, müssen regelmäßig zweieinhalb oder mehr Lagen des Folienmaterials aufgebracht werden. Gerade bei Folien ist dies aufgrund des relativ hohen Preises ein nicht zu vernachlässigender Kostenfaktor.

Ein gattungsgemäßer Ballenwickler ist aus EP 1 872 648 A1 bekannt.

Hiervon ausgehend liegt der vorliegenden Erfindung die Aufgabe zugrunde, einen verbesserten Ballenwickler der genannten Art zu schaffen, der Nachteile des Standes der Technik vermeidet und Letzteren in vorteilhafter Weise weiterbildet. Insbesondere soll eine effiziente und kostengünstige Umwicklung des Erntegutballens mit einer Wickelmaterialbahn ermöglicht werden, ohne die Prozesssicherheit und einfache Handhabung zu opfern.

Erfindungsgemäß wird die genannte Aufgabe durch einen Ballenwickler gemäß Anspruch 1 gelöst. Bevorzugte Ausgestaltungen der Erfindung sind Gegenstand der abhängigen Ansprüche.

Es wird also vorgeschlagen, nur noch mit einer Teilraffung zu arbeiten und die Wickelmaterialbahn zum Abschneiden nicht mehr gänzlich zu einem Zopf zusammenzudrücken bzw. zusammenzuraffen. Überraschenderweise ist es ausreichend, wenn die Wickelmaterialbahn zum Zwecke des Abschneidens an den Rändern leicht zusammengerafft wird, während der Zentral- bzw. zwischen den Rändern liegende Mittelabschnitt der Wickelmaterialbahn ungerafft bleiben kann. Erfindungsgemäß ist die Raffeinrichtung dazu ausgebildet, die Wickelmaterialbahn nur an den Rändern zu raffen, so dass die Wickelmaterialbahn beim Abschneiden beidseitig geraffte Ränder und ein ungerafftes, flaches Mittelstück aufweist. Hierdurch kann die vormals für den Zopf benötigte Materiallänge deutlich verkürzt werden, so dass sich die insgesamt für eine Ballenwicklung benötigte Bahnlänge deutlich verkleinert. Gleichzeitig bleibt die Prozesssicherheit erhalten, da sich der Schneidevorgang und auch das Zuführen der Folie zum nächsten Ballen auch mit den nur gerafften Rändern stabil ausführen lässt.

In Weiterbildung der Erfindung sind die seitlich gerafften Ränder zusammen deutlich schmaler als der ungeraffte Mittelteil der Wickelmaterialbahn. Es kann ausreichend sein, wenn die Raffeinrichtung an den Rändern jeweils nur einen schmalen Teil der Wickelmaterialbahn zusammenrafft, wobei der jeweils zusammengeraffte Randabschnitt weniger als 25% der ungerafften Gesamtbreite der Wickelmaterialbahn betragen kann. Es werden also zusammen - am rechten und linken Rand - weniger als 50% der Bahnbreite des ungerafften Materials zusammengerafft.

Mit vielen Folien kann der zusammenzuraffende Randabschnitt noch deutlich kleiner gehalten werden, beispielsweise unter 10% der ungerafften Gesamtbreite der Wickelmaterialbahn. Insbesondere kann es auch ausreichend sein, rechts und links am Rand der Wickelmaterialbahn nur einige wenige Zentimeter zu raffen, um die Wickelmaterialbahn dann sicher abzuschneiden und/oder zum nächsten zu wickelnden Erntegutballen zuzuführen.

Um verschiedene Wickelmaterialien effizient nutzen und stets nur so viel am Rand zusammenzuraffen, wie nötig ist, kann in Weiterbildung der Erfindung die Raffeinrichtung hinsichtlich ihrer Raffbreite variabel einstellbar ausgebildet sein. Durch die einstellbare Raffbreite kann die jeweils verarbeitete Wickelmaterialbahn am Rand einmal mehr oder einmal weniger zusammengerafft werden, um jeweils nur so viel zusammenzuraffen, wie das jeweilige Material benötigt. Durch eine einstellbare Raffbreite der Raffeinrichtung können verschiedene Wickelmaterialien, insbesondere verschiedene Folienmaterialien und/oder verschiedene Foliendicken optimal verarbeitet werden.

Die Verstellung der Raffbreite der Raffeinrichtung kann grundsätzlich verschieden bewerkstelligt werden, beispielsweise durch manuelles mechanisches Einstellen der kinematischen Beweglichkeiten der Raffeinrichtung. Gemäß der Erfindung ist eine elektronische Steuereinrichtung zum Einstellen der Raffbreite vorgesehen, von der ein fremdenergiebetätigbarer Stellaktor der Raffeinrichtung ansteuerbar ist, mit Hilfe dessen dann die Raffbreite verändert wird. Beispielsweise kann die Steuereinrichtung ein Bedienterminal aufweisen, an dem die gewünschte Raffbreite eingebbar ist, so dass die Steuereinrichtung in Abhängigkeit der eingegebenen Raffbreite die Raffeinrichtung bzw. deren Stellaktor entsprechend ansteuern kann. Dabei kann die genannte Steuereinheit auch verschiedene Voreinstellungen für verschiedene Wickelmaterialtypen implementieren. Hierzu besitzt die Steuereinrichtung Raffbreiten-Voreinstellmittel zum Einstellen verschiedener Raffbreiten für verschiedene Wickelmaterialtypen und Materialtypen-Auswahlmittel zum Auswählen einer von mehreren Voreinstellungen aufweisen. Über die genannten Raffbreiten-Voreinstellmittel können auch für neue, bislang nicht verwendete Folientypen bzw. Materialarten geeignete Raffbreiten eingestellt werden. Umgekehrt können durch die genannten Auswahlmittel die geeigneten Raffbreiten für verschiedene Materialtypen leicht ausgewählt werden, da diese bereits voreingestellt sind. Beispielsweise können am Terminal der Steuereinrichtung verschiedene Auswahltasten oder -knöpfe - beispielsweise in Form von Touchscreen-Buttons - vorgesehen sein, die entsprechend gekennzeichnet sind, zu welchem Material sie gehören. Beispielsweise können sie mit einer Beschriftung wie "Folientyp XY" oder "Folientyp ZZ" beschriftet sein, so dass lediglich die verwendete Materialie einzugeben ist, woraufhin sich dann die Raffeinrichtung passend einstellt, um die passende Raffbreite zu realisieren.

Zusätzlich zu solchen Voreinstellungen der Raffbreite kann die Steuereinheit auch noch weiter automatisiert ausgebildet sein, insbesondere dergestalt, dass Erfassungsmittel zum Erfassen des jeweils verwendeten Wickelmaterials vorgesehen sind und die Steuereinheit in Abhängigkeit des erfassten Materialtyps die Raffbreite automatisch einstellt. Die Erfassungsmittel zum Erfassen des Materialtyps können dabei grundsätzlich verschieden ausgebildet sein, beispielsweise kann eine Scan-Einrichtung ein Materialtypenschild an der Wickelmaterialrolle erfassen. Alternativ oder zusätzlich kann ein RFID-Chip an der Folie angebracht sein, der von einem RFID-Leser eingelesen wird.

Um die Folien- bzw. Wickelmaterialbahn-Ränder in der gewünschten Weise begrenzt zu raffen, kann die Raffeinrichtung ein Paar Materialbahnformer aufweisen, die entlang der Zuführungsbahn für das Wickelmaterial den rechten und linken Rändern der Wickelmaterialbahn zugeordnet und quer zur Zuführrichtung in Richtung der Breite der ausgebreiteten Wickelmaterialbahn in ihrem Abstand voneinander verstellbar ausgebildet sind, insbesondere derart, dass die beiden rechts und links von der Wickelmaterialbahn angeordneten Materialbahnformer aufeinander zu und voneinander weg bzw. auseinander gefahren werden können. Die Verstellbarkeit der genannten Materialbahnformer kann hierbei kinematisch unterschiedlich realisiert sein, beispielsweise durch eine lineare Verfahrbarkeit und/oder durch eine Verschwenkbarkeit und/oder Kombinationen hieraus.

Die Erfindung wird nachfolgend anhand eines bevorzugten Ausführungsbeispiels und zugehöriger Zeichnungen näher erläutert. In den Zeichnungen zeigen:

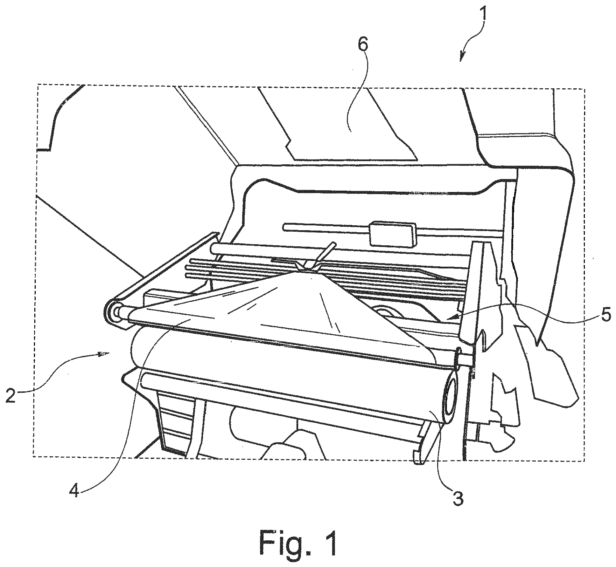

- Fig. 1:: eine schematische, ausschnittsweise, perspektivische Darstellung eines Ballenwicklers, bei dem die zugeführte Wickelmaterialbahn durch eine Raffeinrichtung zu einem Zopf zusammengerafft wird, und
- Fig. 2:: eine perspektivische, ausschnittsweise Darstellung der Raffeinrichtung und der hierdurch zu realisierenden Raffung nur der Ränder.

Der Ballenwickler kann in an sich bekannter Weise an eine Ballenpresse angekoppelt sein, um aus deren Ballenformkammer einen geformten Erntegutballen zu übernehmen. In an sich ebenfalls bekannter Weise kann der Ballenwickler 1 einen Wickelmaterialspeicher 2 aufweisen, in dem beispielsweise eine Wickelmaterialrolle 3 aufgenommen und abgerollt werden kann, um zum Umwickeln eines Erntegutballens das Wickelmaterial von der Wickelmaterialrolle 3 abziehen zu können.

Die abgezogene Wickelmaterialbahn 4 wird von einer Zuführeinrichtung 5 zum Erntegutballen bzw. zur Wickelvorrichtung 6 zugeführt, die in an sich ebenfalls bekannter Weise ein oder mehrere Wickelelemente beispielsweise in Form von Wickelstäben aufweisen kann, um die Wickelmaterialbahn um den Erntegutballen zu wickeln.

Entlang der Zuführbahn, die durch die Zuführvorrichtung 5 realisiert ist, ist eine Schneideinrichtung 7 vorgesehen, um die als Endlosgut von der Wickelmaterialrolle 3 abgezogene Wickelmaterialbahn abschneiden zu können, wenn ein Erntegutballen umwickelt ist.

Im Bereich der genannten Schneideinrichtung 7 ist eine Raffeinrichtung 8 vorgesehen, mittels derer die Wickelmaterialbahn 4 von deren Rändern 9, 10 her gerafft werden kann, wozu die genannte Raffeinrichtung 8 zwei gegenüberliegende, an den rechten und linken Rändern der Wickelmaterialbahn 4 angeordnete Materialbahnformer 11 und 12 aufweist, beispielsweise in Form von Anschlägen, Stäben, Winkelblechen oder dergleichen. Die genannten Materialbahnformer 11 sind verstellbar ausgebildet, so dass der zwischen den Materialbahnformern 11 gegebene Abstand verändert werden kann, d.h. die Materialbahnformer 11 und 12 können aufeinander zu und voneinander weg gefahren werden, und zwar in einer Richtung quer zur Zuführrichtung und in Richtung der Breite der ausgebreiteten Wickelmaterialbahn.

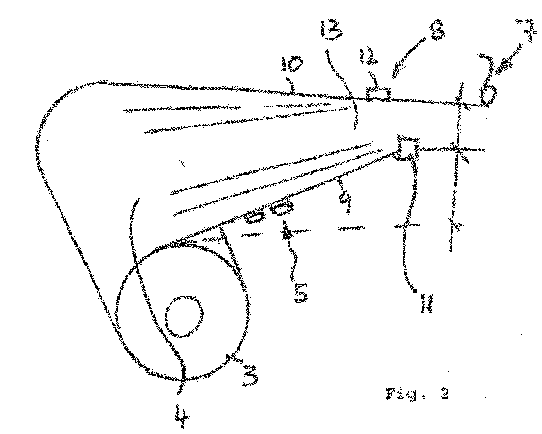

Durch die Abstandsveränderlichkeit der Materialbahnformer 11 und 12 kann die Wickelmaterialbahn 4 zum Umwickeln des Erntegutballens ungerafft zum Ballen laufen. Wird die Fertigstellung der Umwicklung erreicht bzw. nähert sich der Wickelvorgang dem Ende an, können die genannten Materialbahnformer 11 der Raffeinrichtung 8 zusammengefahren werden, um die Ränder 9 und 10 der Wickelmaterialbahn 4 zu raffen, wie dies in Fig. 2 gezeigt ist.

Vorteilhafterweise arbeitet die Raffeinrichtung 8 dabei derart, dass nur die Ränder 9 und 10, beispielsweise einige wenige Zentimeter der Wickelmaterialbahn zusammengerafft werden, während der deutlich größere Mittelteil der Wickelmaterialbahn 4 ungerafft flach ausgebreitet verbleibt. In diesem Zustand kann die Schneideinrichtung 7 die Wickelmaterialbahn 4 abtrennen, so dass der Wickelvorgang fertiggestellt, der fertig umwickelte Erntegutballen abgeladen, ein neuer Erntegutballen aufgenommen und ein neuer Wickelvorgang gestartet werden kann.

## Patentansprüche

1. Ballenwickler zum Umwickeln von Erntegutballen mit einer Wickelmaterialbahn (4), umfassend eine Zuführeinrichtung (5) zum Zuführen der Wickelmaterialbahn (4), eine Schneideinrichtung (7) zum Abschneiden/ -trennen der Wickelmaterialbahn (4) nach Umwickeln eines Erntegutballens sowie einer Raffeinrichtung (8) zum Raffen der Wickelmaterialbahn (4) beim/ zum Abschneiden, wobei die Raffeinrichtung (8) hinsichtlich ihrer Raffbreite variabel einstellbar und dazu ausgebildet ist, die Wickelmaterialbahn (4) nur an den Rändern (9, 10) zu raffen, so dass die Wickelmaterialbahn (4) beim Abschneiden beidseitig geraffte Ränder (9, 10) und ein ungerafftes, flaches Mittelstück (13) aufweist, **dadurch gekennzeichnet, dass** eine elektronische Steuereinrichtung zum Einstellen der Raffbreite und Ansteuern eines fremdenergiebetätigbaren Stellaktors der Raffeinrichtung (8) vorgesehen ist, wobei die Steuereinrichtung (14) Raffbreiten-Voreinstellmittel zum Voreinstellen verschiedener Raffbreiten für verschiedene Wickelmaterialtypen aufweist, wobei die Steuereinrichtung Materialtypen-Auswahlmittel zum Auswählen eines verwendeten Wickelmaterialtyps aufweist und wobei die Steuereinrichtung (14) eingerichtet ist, die Raffeinrichtung (8) auf die für den ausgewählten Wickelmaterialtyp voreingestellte Raffbreite einzustellen.

2. Ballenwickler nach dem vorhergehenden Anspruch, wobei die gerafften Ränder (9, 10) zusammen schmäler sind als das ungeraffte, flache Mittelstück (13).

3. Ballenwickler nach einem der vorhergehenden Ansprüche, wobei die Raffeinrichtung (8) an den Rändern (9, 10) jeweils eine Raffbreite vorsieht, die weniger als 25% der ungerafften Gesamtbreite der Wickelmaterialbahn (4) beträgt.

4. Ballenwickler nach dem vorhergehenden Anspruch, wobei die Raffeinrichtung dazu ausgebildet ist, an den Rändern (9, 10) weniger als 10% der Gesamtbreite der ungerafften Wickelmaterialbahn (4), insbesondere rechts und links nur einige Zentimeter, zu raffen.

5. Ballenwickler nach einem der vorhergehenden Ansprüche, wobei Erfassungsmittel (17) zum Erfassen des verwendeten Wickelmaterials vorgesehen sind und die Steuereinrichtung (14) dazu ausgebildet ist, die Raffbreite der Raffeinrichtung (8) automatisch in Abhängigkeit des erfassten Wickelmaterials einzustellen.

6. Ballenwickler nach einem der vorhergehenden Ansprüche, wobei die Raffeinrichtung (8) ein Paar Materialbahnformer (11, 12) aufweist, die entlang des Zuführwegs der Wickelmaterialbahn rechten und linken Rändern der Wickelmaterialbahn zugeordnet und quer zur Zuführrichtung in Richtung der Breite der Wickelmaterialbahn in ihrem Abstand voneinander verstellbar ausgebildet sind.

7. Ballenwickler nach einem der vorhergehenden Ansprüche, wobei der Ballenwickler Verbindungsmittel zum Verbinden mit einer Ballenpresse aufweist und dazu ausgebildet ist, aus der Ballenformkammer einer Ballenpresse geformte Erntegutballen zu erhalten.

## Claims

1. A bale wrapper for wrapping harvest product bales having a wrapping material web (4) comprising a supply device (5) for supplying the wrapping material web (4), a cutting device (7) for cutting off/separating the wrapping material web (4) after wrapping a harvest product bale, and a gathering device (8) for gathering the wrapping material web (4) on/for the cutting off, wherein the gathering device (8) is variably adjustable with respect to its gathering width and is configured to gather the wrapping material web (4) only at the margins (9, 10) such that the wrapping material web (4) has margins (9, 10) gathered at both sides and an ungathered, flat middle piece (13) on the cutting off, **characterized in that** an electronic control device for setting the gathering width and for controlling an adjustment actuator actuable by external energy of the gathering device (8) is provided, with the control device (14) having gathering width presetting means for presetting different gathering widths for different wrapping material types, with the control device having material type selection means for selecting a wrapping material type used, and with the control device (14) being configured to set the gathering device (8) to the gathering width preset for the selected wrapping material type.

2. A bale wrapper in accordance with the preceding claim, wherein the gathered margins (9, 10) are together narrower than the ungathered flat middle piece (13).

3. A bale wrapper in accordance with one of the preceding claims, wherein the gathering device (8) provides respective gathering widths at the margins (9, 10) that amount to less than 25% of the ungathered total width of the wrapping material web (4).

4. A bale wrapper in accordance with the preceding claim, wherein the gathering device is configured to gather less than 10% of the total width of the ungathered wrapping material web (4) at the margins (9, 10), in particular only some centimeters to the right and left.

5. A bale wrapper in accordance with one of the preceding claims, wherein detection means (17) for detecting the wrapping material used are provided and the control device (14) is configured to set the gathering width of the gathering device (8) automatically in dependence on the detected wrapping material.

6. A bale wrapper in accordance with one of the preceding claims, wherein the gathering device (8) has a pair of material web shapers (11, 12) that are associated with the right and left margins of the wrapping material web along the supply path of the wrapping material web and that are configured as adjustable in their spacing from one another transversely to the supply direction in the direction of the width of the laid out wrapping material web.

7. A bale wrapper in accordance with one of the preceding claims, wherein the bale wrapper has connection means for connecting to a baler and is configured to receive shaped harvest product bales from the bale forming chamber of a baler.

## Revendications

1. Enrubanneuse destinée à enrubanner des balles de produit récolté avec une bande de matériau d'enrubannage (4), comprenant un dispositif d'alimentation (5) pour alimenter la bande de matériau d'enrubannage (4), un dispositif de coupe (7) pour couper/détacher la bande de matériau d'enrubannage (4) après l'enrubannage d'une balle de produit récolté ainsi qu'un dispositif de plissage (8) pour plisser la bande de matériau d'enrubannage (4) lors de / pour la découpe, le dispositif de plissage (8) pouvant être réglé de manière variable en ce qui concerne la largeur de plissage et étant conçu pour plisser la bande de matériau d'enrubannage (4) uniquement sur les bords (9, 10), de sorte que la bande de matériau d'enrubannage (4) comporte, lors de la coupe, des bords (9, 10) plissés des deux côtés et une partie centrale (13) plane non plissée, **caractérisée en ce qu'**un dispositif de commande électronique est prévu pour régler la largeur de plissage et commander un actionneur de réglage actionnable par énergie externe du dispositif de plissage (8), le dispositif de commande (14) comportant des moyens de préréglage de largeur de plissage pour prérégler différentes largeurs de plissage pour différents types de matériau d'enrubannage, le dispositif de commande comportant des moyens de sélection de type de matériau pour sélectionner un type de matériau d'enrubannage utilisé et le dispositif de commande (14) étant configuré pour régler le dispositif de plissage (8) sur la largeur de plissage préréglée pour le type de matériau d'enrubannage sélectionné.

2. Enrubanneuse selon la revendication précédente, dans laquelle les bords (9, 10) plissés ensemble sont plus étroits que la partie centrale (13) plane non plissée.

3. Enrubanneuse selon l'une des revendications précédentes, dans laquelle le dispositif de plissage (8) prévoit sur les bords (9, 10) respectivement une largeur de plissage qui est inférieure à 25 % de la largeur totale non plissée de la bande de matériau d'enrubannage (4).

4. Enrubanneuse selon la revendication précédente, dans laquelle le dispositif de plissage est conçu pour plisser sur les bords (9, 10) moins de 10 % de la largeur totale de la bande de matériau d'enrubannage (4) non plissée, en particulier seulement quelques centimètres à droite et à gauche.

5. Enrubanneuse selon l'une des revendications précédentes, dans laquelle des moyens de détection (17) sont prévus pour détecter le matériau d'enrubannage utilisé et le dispositif de commande (14) est conçu pour régler la largeur de plissage du dispositif de plissage (8) automatiquement en fonction du matériau d'enrubannage détecté.

6. Enrubanneuse selon l'une des revendications précédentes, dans laquelle le dispositif de plissage (8) comporte une paire d'éléments de formation de bande de matériau (11, 12), qui sont associés aux bords droit et gauche de la bande de matériau d'enrubannage le long de la voie d'alimentation de la bande de matériau d'enrubannage et qui sont conçus réglables en ce qui concerne la distance entre eux transversalement au sens d'alimentation dans la direction de la largeur de la bande de matériau d'enrubannage.

7. Enrubanneuse selon l'une des revendications précédentes, dans laquelle l'enrubanneuse comporte des moyens de liaison pour la liaison avec une presse à balles et est conçue pour recevoir des balles de produit récolté formées provenant de la chambre de formation de balles d'une presse à balles.
